# EUROPÄISCHE PATENTANMELDUNG

(11) **EP 0 543 252 A1**
(43) Veröffentlichungstag der Anmeldung: **26.05.1993**
(21) Anmeldenummer: 92119160.7
(22) Anmeldetag: 09.11.1992
(51) Int. Cl.: G02B 6/44

(54) **Verfahren zur Herstellung eines Lichtwellenleiterkabels**

(30) Priorität: 22.11.1991 DE 4138436
(71) Anmelder: kabelmetal electro GmbH, D-30002 Hannover (DE)
(72) Erfinder: Ziemek, Gerhard, Dr.-Ing., W-3012 Langenhagen (DE); Selke, Carsten, W-3016 Seelze 2 (DE); Bauermeister, Klaus, W-3016 Seelze 4 (DE); Staschewski, Harry, W-3012 Langenhagen (DE)

(57) **Zusammenfassung**

Es wird ein Verfahren zur Herstellung eines Lichtwellenleiterkabels aus mehreren in einer Ebene nebeneinander liegenden Lichtwellenleitern beschrieben, die gemeinsam in einer Schicht aus einem UV-gehärteten synthetischen Harz eingebettet sind (Bändchenkabel). Die in horizontaler Richtung zugeführten Lichtwellenleiter werden mit dem noch flüssigen synthetischen Harz benetzt, in direktem Kontakt miteinander parallel und in einer horizontalen Ebene zueinander verlaufend durch ein Werkzeug mit einem den Außenabmessungen des Bändchenkabels entsprechenden Schlitz hindurchgeführt wobei das den Lichtwellenleitern anhaftende flüssige Harz in die Zwickel zwischen den Lichtwellenleitern gedrückt wird und diese zumindest teilweise ausfüllt. Das Harz wird unmittelbar nach dem Austritt aus dem Werkzeug mit UV-Strahlung gehärtet.

## Beschreibung

Die vorliegende Erfindung betrifft ein Verfahren zur Herstellung eines Lichtwellenleiterkabels aus mehreren in einer Ebene nebeneinanderliegenden Lichtwellenleitern, die gemeinsam in einer Schicht aus einem UV-gehärteten synthetischen Harz eingebettet sind (Bändchenkabel).

Man hat versucht, die in Rede stehenden Bändchenkabel bzw. Flachkabel dadurch herzustellen, daß die Lichtwellenleiter zwischen zwei Folien gelegt werden und durch Verschweißen oder Verkleben der Folien positioniert werden.

Eine andere Möglichkeit besteht darin, daß die Lichtwellenleiter durch den Querspritzkopf eines Extruders hindurchgeführt und mit einer gemeinsamen Umhüllung aus Polymermaterial versehen werden.

Beide Verfahren haben sich wegen der extrem hohen Empfindlichkeit der Lichtwellenleiter, insbesondere gegen Bruch nicht durchsetzen können.

Aus der EP- 0 104 864 ist ein Verfahren bekanntgeworden, bei dem die Lichtwellenleiter - hierunter wird eine mit einem sogenannten Coating auf Kunststoffbasis beschichtete optische Faser verstanden - durch einen Behälter geführt werden, der ein durch UV-Strahlung aushärtbares Harz enthält. Unterhalb des Behälters werden die in einer Ebene nebeneinanderliegenden Lichtwellenleiter beiderseits von einem Kunststoffband eingefaßt, welches gegen die mit dem noch flüssigen Harz beschichteten Lichtwellenleiter gedrückt wird. Infolge des Druckes verteilt sich das flüssige Harz und füllt die Zwickel zwischen den Lichtwellenleitern aus. Die Lichtwellenleiter werden dann gemeinsam mit den Kunststoffbändern der UV-Härtungsstation zugeführt, in welcher das Harz ausgehärtet wird. Die Kunststoffbänder sind für UV-Strahlung durchlässig. Sie werden nach dem Aushärten von der Oberfläche des Bändchenkabels abgezogen. Nachteilig bei diesem Verfahren ist, daß die Verwendung der Bänder, auch wenn diese wiederverwendet werden, die Fertigung verteuert. Durch die Zuführung der Bänder wird die Fertigungsgeschwindigkeit begrenzt.

Bei einem aus der DE-A- 36 06 626 bekannten Verfahren werden die Lichtwellenleiter in einer Ebene nebeneinanderliegend von oben in eine mit einem flüssigen Harz gefüllten Vorrichtung eingeführt. Die Lichtwellenleiter, die mit flüssigem Harz benetzt sind, treten aus einer am unteren Ende der Vorrichtung vorgesehenen Öffnung aus. Das aus der Vorrichtung austretende Bändchenkabel wird einer UV-Strahlung ausgesetzt, durch welche das Harz ausgehärtet wird. Die Außenhülle des nach diesem Verfahren hergestellten Bändchenkabels bildet zwischen den einzelnen Lichtwellenleitern eine dünne, etwa stegförmige Verbindung. Die sich dadurch ergebende wellige Oberfläche des Bändchenkabels ist aus vielerlei Gründen nachteilig.

Der vorliegenden Erfindung liegt die Aufgabe zugrunde, ein Verfahren anzugeben, mit dem Bändchenkabel mit nahezu glatter Oberfläche und gleichmäßiger Schichtdicke ohne großen apparativen Aufwand mit hohen Fertigungsgeschwindigkeiten hergestellt werden können.

Diese Aufgabe wird durch die Kombination der folgenden Merkmale gelöst:
a) die in horizontaler Richtung zugeführten Lichtwellenleiter werden mit dem noch flüssigen synthetischen Harz benetzt
b) die Lichtwellenleiter werden in direktem Kontakt miteinander in einer horizontalen Ebene nebeneinander verlaufend durch ein Werkzeug mit einem den Außenabmessungen des Bändchenkabels entsprechenden Schlitz hindurchgeführt und dabei wird das den Lichtwellenleitern anhaftende flüssige Harz in die Zwickel zwischen den Lichtwellenleitern gedrückt und füllt diese zumindest teilweise aus und
c) das Harz wird unmittelbar nach dem Austritt aus dem Werkzeug mit UV-Strahlung gehärtet.

Durch das erfindungsgemäße Verfahren ist es möglich, mit Geschwindigkeiten von mehr als 100 m/min Bändchenkabel der beschriebenen Art in einer horizontalen Ebene herzustellen. Je nach Viskosität des aufzubringenden Harzes sind Geschwindigkeiten bis zu 300 m/min und mehr erreichbar. Auf Anlagen großer Höhe, wie sie derzeit auf dem Markt erhältlich sind, deren Handhabung umständlich ist, kann durch die Erfindung verzichtet werden.

Vorteilhafterweise werden die Lichtwellenleiter in einer Ebene dicht nebeneinander verlaufend durch das noch flüssige synthetische Harz hindurchgeführt, wobei in dem Harz ein Druck von mehr als 1 bar vorherrscht. Durch diese Maßnahme ist sichergestellt, daß keine Lufteinschlüsse in der gehärteten Harzschicht vorhanden sind.

Nach einer besonders vorteilhaften Weiterbildung der Erfindung werden die einzelnen Lichtwellenleiter unmittelbar vor dem Benetzen, d.h. im selben Arbeitsgang, mit einer Farbschicht versehen. Diese Farbschicht, deren Farbton für die einzelnen Lichtwellenleiter zur besseren Unterscheidung derselben unterschiedlich sein sollte, besteht aus dem gleichen Grundmaterial wie die die Lichtwellenleiter einbettende Schicht. Als zweckmäßig hat sich ein Acrylharz erwiesen. Die Lichtwellenleiter, d.h. die mit einer Kunststoffschicht (coating) versehenen optischen Fasern, werden vor dem Benetzen zweckmäßigerweise derart vorbehandelt, daß sie sich elektrostatisch anziehen. Dazu werden die Lichtwellenleiter wechselweise elektrostatisch aufgeladen und entionisiert, so daß der jeweils benachbarte Lichtwellenleiter eine unterschiedliche elektrische Ladung aufweist, und sich die Lichtwellenleiter anziehen. Dadurch gelangen die Lichtwellenleiter schon als Bandvorform in die Benetzungseinrichtung.

Als besonders vorteilhaft hat es sich erwiesen, daß die Lichtwellenleiter in horizontaler Richtung durch ein Bad aus flüssigem Harz hindurchgeführt werden. Damit ist eine Benetzung der gesamten mit dem Flüssigharz in Kontakt gelangten Oberfläche möglich.

Die mit Flüssigharz benetzten Lichtwellenleiter werden nach einer besonders vorteilhaften Weiterbildung der Erfindung zwischen zwei zylindrischen Walzen hindurchgeführt, von denen zumindest eine eine im Umfangsrichtung verlaufende Nut aufweist, in welcher die parallel in einer Ebene gelegenen Lichtwellenleiter geführt werden. Die Nut sowie die zweite Walze bilden einen Schlitz, dessen Breite und Höhe die Breite und Höhe des Bändchenkabels bestimmt. Das heißt, daß das flüssige Kunstharzmaterial beim Durchtritt durch die Walzen derart verteilt wird, daß es in die Zwickel zwischen den Lichtwellenleitern verdrängt wird und diese nahezu vollständig ausfüllt. Überschüssiges Harzmaterial wird zurückgehalten.

Da der Durchmesser der Lichtwellenleiter von Spule zu Spule innerhalb der zulässigen Toleranz schwanken kann, hat es sich als zweckmäßig erwiesen, den Außendurchmesser vor dem Einlauf in das Bad zu messen und die Breite und Höhe des Schlitzes dem veränderten Durchmesser anzupassen.

Eine hierfür geeignete Vorrichtung ist später beschrieben.

Die Lichtwellenleiter können auch einzeln mit einer nahezu gleichmäßigen Harzschicht beschichtet werden und anschließend zu einer Ebene liegend zusammengeführt und durch den Schlitz des Werkzeugs, z.B. die Nut hindurchgeführt werden. Durch das Zusammenführen in dem Schlitz wird das Harzmaterial aus dem Bereich der Berührungsfläche zwischen den Lichtwellenleitern in die Zwickelräume verdrängt. In diesem Zustand wird das Harz gehärtet.

Die Dicke der aufgetragenen Harzschicht ist abhängig von der Geschwindigkeit, mit der die Lichtwellenleiter durch das Bad transportiert werden, sowie von der Viskosität des Harzmaterials. Wenn größere Schichtdicken gewünscht werden, kann der Beschichtungsvorgang, d.h. Benetzen und UV-Härten beliebig oft im gleichen Arbeitsschritt wiederholt werden.

Ein wesentlicher Vorteil des erfindungsgemäßen Verfahrens ist, daß es mit extrem einfachen Mitteln gelungen ist, ein Bändchenkabel in horizontaler Arbeitsweise mit hohen Fertigungsgeschwindigkeiten herzustellen, in welchem die Lichtwellenleiter stets die gleiche Lage einnehmen. Dadurch lassen sich die Bändchenkabel einfach miteinander verspleißen.

Gegenstand der Erfindung ist ebenfalls eine Vorrichtung zur Herstellung eines Lichtwellenleiterkabels aus mehreren in einer Ebene nebeneinander liegenden Lichtwellenleitern, die gemeinsam in einer Schicht aus einem UV-gehärteten synthetischen Harz eingebettet sind (Bändchenkabel).

Diese Vorrichtung zeichnet sich aus durch
a) eine Ablaufvorrichtung für die auf Spulen befindlichen Lichtwellenleiter
b) eine Vorrichtung zum Benetzen der Lichtwellenleiter mit flüssigem synthetischen Harz
c) eine Vorrichtung mit einem Längsschlitz zum Zusammenführen der Lichtwellenleiter in eine Bändchenform und/oder zum Abstreifen und gleichzeitigem Verteilen von überschüssigem Harzmaterial
d) eine unmittelbar dahinter angeordnete UV-Härtungseinrichtung für das synthetische Harz sowie
e) eine Aufwickelvorrichtung für das fertige Bändchenkabel,
wobei die Vorrichtungen a) bis e) in einer horizontalen Ebene angeordnet sind und einen im Wesentlichen horizontalen Durchlauf der Lichtwellenleiter und des Bändchenkabels gewährleisten.

Mit besonderem Vorteil sind die Ablaufvorrichtungen für die Lichtwellenleiter jeweils mit einer Hysteresebremse abbremsbar. Diese Art von Bremse ist sehr gut regelbar und optimal für empfindliches Gut wie Lichtwellenleiter. Um Abrisse zu vermeiden, ist unmittelbar hinter der Ablaufvorrichtung für die Lichtwellenleiter eine Abzugsscheibe angeordnet, die über einen sogenannten Tänzer geregelt ist.

Der Abzug aller Lichtwellenleiter von der Ablaufvorrichtung erfolgt gleichmäßig mittels einer Abzugsscheibe. Der Tänzer mißt die Auslenkung der Lichtwellenleiter und regelt über das Maß der Auslenkung die Abzugsgeschwindigkeit. Die Abzugsvorrichtung besteht aus einer Abzugsscheibe, gegen deren Umfangsfläche bzw. ein Teil davon die Lichtwellenleiter mittels eines über Umlenkrollen geführten endlosen Bandes gedrückt werden.

Hinter der Abzugseinrichtung können Einfärbeeinrichtungen für die Lichtwellenleiter vorgesehen sein. Diese Einfärbeeinrichtungen sind zweckmäßigerweise Ringdüsen, durch die der jeweilige Lichtwellenleiter hindurchgeführt und dabei mit einer gleichmäßigen dünnen Schicht aus eingefärbtem synthetischen Harz versehen wird. Hinter den Ringdüsen ist eine UV-Härtungsanlage angeordnet.

Die Vorrichtung zum Benetzen der Lichtwellenleiter ist mit besonderem Vorteil ein Badbehälter mit einem Überlauf am ausgangsseitigen Ende. Während des Betriebes ist der Badbehälter soweit mit flüssigem synthetischem Harz gefüllt, daß das synthetische Harz durch die Überläufe austritt, und dadurch die Lichtwellenleiter vom Eintritt in den Badbehälter bis zum Austritt aus dem Badbehälter vollständig in das flüssige synthetische Kunstharz eintauchen.

Unterhalb des Badbehälters ist eine Auffangwanne vorgesehen, von der das aus den Überläufen in die Auffangwanne gelangte flüssige synthetische Harz mittels einer Pumpe in den Badbehälter zurücktransportiert wird.

Mit besonderem Vorteil ist die Vorrichtung zum Benetzen der Lichtwellenleiter eine Druckkammer, die sowohl am eingangsals auch am ausgangsseitigen Ende abgedichtet ist. Zweckmäßigerweise bestehen die Abdichtungen aus zwei parallel zueinander angeordneten Walzen, von denen eine eine umfangsseitig verlaufende Nut aufweist. Die Nut bildet mit der zweiten Walze einen Schlitz dessen Querschnitt gleich dem Querschnitt des Bändchenkabels ist. Diese Anordnungen gestatten bei dem vorherrschenden Druck nur einen geringen Austritt von synthetischem Harz.

Vorteilhafterweise ist die ausgangsseitige Abdichtung der Druckkammer durch einen den Querschnitt des Bändchenkabels formenden Schlitz gebildet, und die Höhe des Schlitzes durch einen Exzenter und die Breite des Schlitzes durch eine auf dem Extruder längsverschiebliche Hülse einstellbar. Eine solche Kalibriereinrichtung kann auch unmittelbar hinter der ausgangsseitigen Abdichtung angeordnet sein. Mit dieser vorteilhaften Lösung lassen sich Höhe und Breite des Bändchenkabels veränderten Bedingungen wie z. B. Durchmesserschwankungen der Lichtwellenleiter stufenlos anpassen. Eine vorteilhafte konstruktive Ausgestaltung einer solchen verstellbaren Kalibriervorrichtung ist später beschrieben.

Unmittelbar vor der Vorrichtung zum Benetzen der Lichtwellenleiter ist für jeden Lichtwellenleiter eine Auflade- oder Entionisierungsvorrichtung vorgesehen. Auflade- und Entionisierungsvorrichtung sind in wechselnder Folge nebeneinander angeordnet. Daraus resultiert, daß sich benachbarte Lichtwellenleiter gegenseitig anziehen und die Lichtwellenleiter schon in Bandform in den Badbehälter eintreten.

In der einfachsten Form ist die Aufladevorrichtung ein Filzteil, mit dem die aufzuladenden Lichtwellenleiter im Durchlauf kontaktiert werden. Durch die Reibung zwischen dem Filzteil und der Kunststoffoberfläche des Lichtwellenleiters wird diese elektrostatisch aufgeladen und haftet dadurch an nicht aufgeladenen oder entgegengesetzt aufgeladenen Lichtwellenleitern.

Handelt es sich bei dem Badbehälter um einen Behälter mit zwei Überläufen, so sind hinter dem Badbehälter zwei Walzen mit horizontalen Achsen vorgesehen. Eine der Walzen weist eine umfangsseitige Nut auf, so daß sich ein den Querschnitt des Bändchenkabels formender Schlitz bildet, durch den die Lichtwellenleiter hindurchführbar sind. Die Walzen sind oberhalb der Auffangwanne befindlich, so daß das durch den Schlitz zurückgehaltene flüssige Harz in die Auffangwanne gelangen kann.

Die in Umfangsrichtung verlaufende Nut ist so augestaltet, daß ihre Breite in Umfangsrichtung kontinuierlich zunimmt. Desgleichen nimmt auch in Umfangsrichtung gesehen die Nuttiefe zu. Durch Drehen der mit Nut versehenen Walze kann dadurch die Breite und die Tiefe des Schlitzes verändert und unterschiedlichen Durchmessern der Lichtwellenleiter angepaßt werden.

Badbehälter, Walzen und Auffangwanne sind in einem lichtundurchlässigen Behälter untergebracht. Dadurch wird eine Härtung des Harzes durch vagabundierende UV-Strahlung vermieden.

Das fertige Bändchenkabel kann im selben Arbeitsgang mit einer Signatur zur besseren Unterscheidung versehen werden. Hierzu dient zweckmäßigerweise eine hinter der letzten UV-Härtungseinrichtung angebrachte Signiereinrichtung, die vorzugsweise eine Lasersigniereinrichtung ist.

Vor der Aufwickelvorrichtung ist eine Abzugsvorrichtung für das ausgehärtete Bändchenkabel vorgesehen, die über einen Tänzer geregelt ist. Diese Abzugsvorrichtung, die vorzugsweise in gleicher Weise aufgebaut ist wie die eingangsseitige Abzugsvorrichtung, gewährleistet - ebenso wie die eingangsseitige Abzugsvorrichtung - einen nahezu längszugfreien Transport der Lichtwellenleiter bzw. des Lichtwellenleiterkabels durch die Fertigungsanlage.

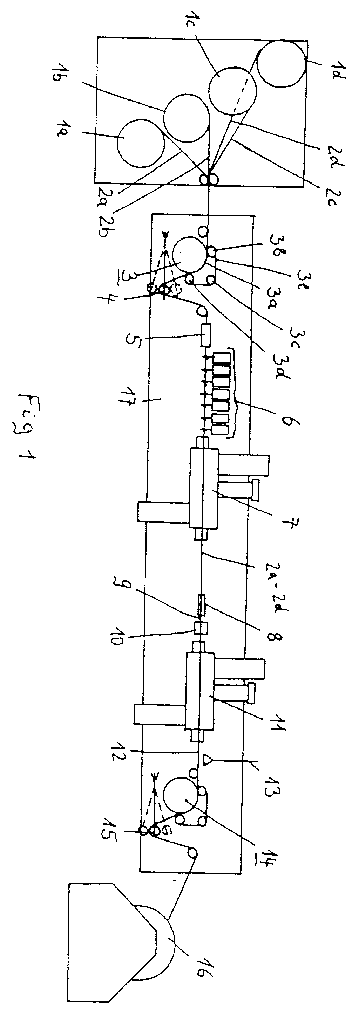

Die Erfindung ist anhand der in den Figuren 1 bis 6 schematisch dargestellten Ausführungsbeispiele näher erläutert.

Es zeigen:
Figur 1 eine Seitenansicht einer Vorrichtung zur Herstellung von Bändchenkabeln.
Figur 2 eine Seitenansicht der Beschichtungsanlage, teilweise im Schnitt.
Figur 3 einen Schnitt durch die Zylinderwalzen der Beschichtungsanlage.
Figur 4 eine Seitenansicht im Schnitt einer Alternative für eine Beschichtungsanlage.
Figur 5 eine vorteilhafte konstruktive Ausbildung der Kalibriereinrichtung.
Figur 6 einen Schnitt durch ein Bändchenkabel.

Die von den Vorratsspulen 1a bis 1d ablaufenden Lichtwellenleiter 2a bis 2d bestehen in an sich bekannter Weise aus einer nicht näher bezeichneten optischen Faser sowie einer die optische Faser vor Beschädigung schützenden Kunststoffbeschichtung. Solche Lichtwellenleiter werden durch Ziehen von erhitzten Glasstäben oder -rohren und anschließendes Beschichten mit Kunststoff hergestellt.

Die Lichtwellenleiter 2a bis 2d werden von einer Abzugsvorrichtung 3 abgezogen, die über einen Tänzer 4 geregelt wird. Die Abzugsvorrichtung 3 besteht aus einer Abzugsscheibe oder -trommel 3a sowie einem über Umlenkrollen 3b bis 3d geführten endlosen Band 3e. Die Lichtwellenleiter 2a bis 2d werden durch das endlose Band 3e auf die Mantelfläche der angetriebenen Abzugsscheibe 3a gedrückt. Die Vorratsspulen 1a bis 1d sind mit einer Hysterebremse versehen, so daß eine maximale Zugkraft an den Lichtwellenleitern 2a bis 2d nicht überschritten wird. Mittels einer Reinigungsvorrichtung 5 werden die Lichtwellenleiter 2a bis 2d entstaubt und entionisiert. In einer Einfärbeeinrichtung 6 werden die einzelnen Lichtwellenleiter 2a bis 2d jeweils mit einer unterschiedlichen Farbschicht versehen. Die Farbschicht besteht aus eingefärbtem Acrylharz, die in einer nachgeschalteten UV-Härtungsanlage 7 gehärtet wird.

Die einzelnen Lichtwellenleiter werden in einer weiteren Entionisierungsanlage 8 entionisiert. Jeder zweite Lichtwellenleiter 2a bis 2d wird an einem nicht näher bezeichneten Filzteil in Kontakt mit diesem entlangbewegt. Dadurch wird auf dem so behandelten Lichtwellenleiter 2a bis 2d eine elektrostatische Ladung erzeugt. Die entionisierten Lichtwellenleiter und die elektrostatisch aufgeladenen Lichtwellenleiter ziehen sich gegeneinander an und bilden hinter der Entionierungsanlage 8 einen Verbund 9. Dieser Verbund 9 gelangt in eine Vorrichtung 10, in welcher der Verbund 9 mit flüssigem Acrylharz benetzt wird und die Acrylharzschicht auf den Lichtwellenleitern 2a bis 2d bzw. dem Verbund 9 derart verteilt wird, daß die Zwickelräume zwischen den einzelnen Lichtwellenleitern 2a bis 2d nahezu vollständig ausgefüllt sind.

Unmittelbar hinter der Beschichtungsvorrichtung 10 befindet sich eine weitere UV-Härtungsanlage 11, in der die Acrylharzbeschichtung ausgehärtet wird.

Das aus der UV-Härtungsanlage 11 austretende Bändchenkabel 12 kann noch mittels einer Lasersignieranlage 13 signiert werden. Eine Abzugsvorrichtung 14, die in gleicher Weise wie die Abzugsvorrichtung 3 aufgebaut ist und deren Antrieb über einen Tänzer 15 geregelt ist, sorgt für einen gleichmäßigen Transport der Lichtwellenleiter 2a bis 2d bzw. des Bändchenkabels 12 durch die Anlage. Das fertige Bändchenkabel 12 kann dann auf eine Spule 16 aufgewickelt werden. Die Aggregate 3, 5, 6, 7, 8, 10, 11, 13 und 14 sind zweckmäßigerweise auf einer Montagewand 17 angeordnet.

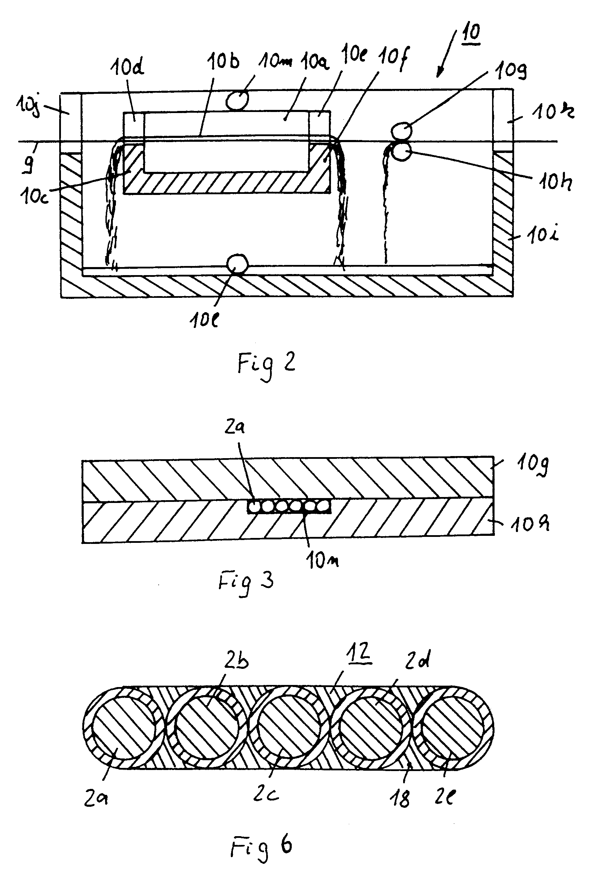

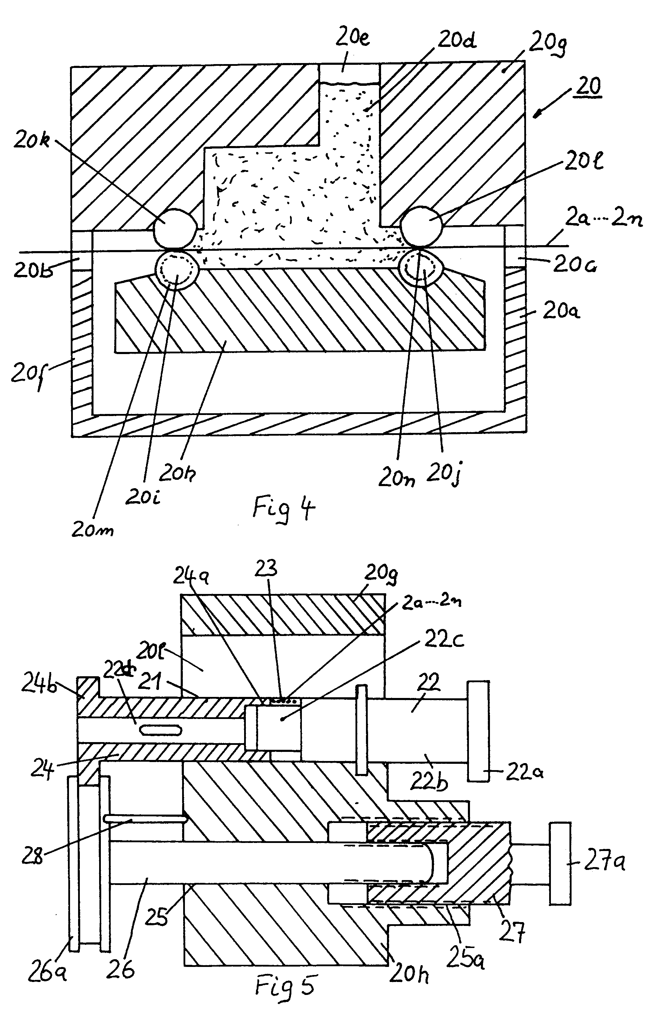

In der Figur 2 ist die Beschichtungsanlage 10 in vergrößertem Maßstab dargestellt. Die Beschichtungsanlage 10 besteht im wesentlichen aus einem Badbehälter 10a, der bis zu der Linie 10b mit Acrylharz gefüllt ist. Der Verbund 9 tritt durch einen in die Frontpartie 10c eingebrachten schlitzartigen Überlauf 10d in den Badbehälter 10a ein und über einen gleichartigen Überlauf 10e in der Rückpartie 10f aus. Der Verbund 9 durchläuft also vom Überlauf 10d bis zum Überlauf 10e das aus flüssigem Acrylharz bestehende Beschichtungsbad.

Hinter dem Badbehälter 10a sind zwei horizontale Walzen 10g und 10h angeordnet, welche die dem Verbund 9 anhaftende Acrylharzschicht glätten.

Der Badbehälter 10a sowie die Walzen 10g und 10h sind innerhalb einer Auffangwanne 10i angeordnet, in welche der Verbund 9 durch einen Eintrittsschlitz 10j ein und einen Austrittsschlitz 10k austritt. In der Auffangwanne 10i wird das durch die Überläufe 10d und 10e ausgetretene sowie durch die Walzen 10g und 10h abgestreifte Acrylharz gesammelt, mittels einer nicht dargestellten Pumpe durch die Öffnung 10l abgesaugt und durch die Öffnung 10m in den Badbehälter 10a zurücktransportiert.

Die Walzen 10g und 10h sind in der Figur 3 vergrößert dargestellt. Die Walze 10h weist eine in Umfangsrichtung verlaufende Nut 10n, deren Breite dem n-fachen des Außendurchmessers eines Lichtwellenleiters ist, wobei n die Anzahl der in einem Bändchenkabel angeordneten Lichtwellenleiter ist. Die Tiefe der Nut 10n ist gleich dem Außendurchmesser der Lichtwellenleiter. Die Form der Nut 10n bestimmt also die Querschnittsform des Bändchenkabels. Überschüssiges Harzmaterial wird abgestreift.

Die Breite und die Tiefe der Nut 10n können in Umfangsrichtung zunehmen, so daß sich bei Drehung der Walze 10h ein anderes Maß für den Schlitz ergibt. Diese Maßunterschiede sind jedoch äußerst gering und bewegen sich im µ-Bereich.

Eine vorteilhaftere Beschichtungseinrichtung ist in Figur 4 dargestellt. Die Vorrichtung 20 besteht aus einem Gehäuse 20a mit je einer Eintrittsöffnung 20b und einer Austrittsöffnung 20c für die Lichtwellenleiter 2a...2n. In dem Gehäuse 20a ist eine Druckkammer 20d gebildet, der über eine Öffnung 20e flüssiges Acrylharz zugeführt wird. Das Gehäuse 20a besteht aus einem Unterteil 20f und einem Oberteil 20g, deren Trennebene in der Ebene der Lichtwellenleiter 2a...2n liegt. In dem Unterteil 20f ist ein Block 20h gelagert, in dem zwei Walzen 20i und 20j angeordnet sind. Im Oberteil sind ebenfalls zwei Walzen 20k und 20l angeordnet. Die Walzen 20i und 20j weisen je eine Umfangsnut 20m und 20n auf, deren Tiefe der Höhe und deren Breite der Breite des Bändchenkabels entspricht. Die Umfangsnuten 20m und 20n bilden gemeinsam mit den durch sie hindurchgeführten Lichtwellenleitern 2a...2n die Abdichtung der Druckkammer 20d. Der in der Druckkammer 20d vorherrschende Druck ist der hydrostatische Druck des Acrylharzes. Diese Ausgestaltung der Beschichtungseinrichtung gewährleistet eine fehlerfreie, porenfreie Beschichtung der Lichtwellenleiter 2a...2n. Die Beschichtungseinrichtung 20 ist in nicht näher dargestellter Weise in Richtung der Lichtwellenleiter 2a...2n verschiebbar und kann mit ihrer Austrittsöffnung 20c unmittelbar an die hinter der Beschichtungseinrichtung 20 angeordnete UV-Härtungsanlage 11 herangefahren werden.

Wie aus der Figur 5 deutlicher hervorgeht kann der durch die Walzen 20e und 20g gebildete hintere Auslaß verstellbar ausgestaltet werden.

In dem Block 20h ist eine erste Bohrung 21 zwischen dem Block 20h und dem Oberteil 20g vorgesehen, in welcher ein erster Bolzen 22 drehbar gelagert ist. Der erste Bolzen 22 weist einen Drehknopf 22a, sowie die Stufungen 22b, 22c und 22d auf. Die Stufung 22c bildet einen Exzenter. In das Oberteil 20g ist die Walze 20l eingelassen, die zwischen sich und dem Exzenter 22c einen Schlitz 23 zur Aufnahme der Lichtwellenleiter 2a...2n bildet. Durch Drehung des Bolzen 22 kann somit über den Exzenter 22c die Höhe des Schlitzes 23 verändert werden.

In die gegenüberliegende Öffnung der Bohrung 21 ist eine Hülse 24 geschoben, die auf der Stufung 22d verdrehungssicher jedoch längsverschieblich angeordnet ist. An ihrem eine Ende weist die Hülse 24 eine exzentrische Bohrung 24a auf, welche den Exzender 22c aufnimmt. Die Stirnfläche der Hülse 24 begrenzt mit der Stirnfläche der Stufung 22b die Breite des Schlitzes 23. Für die Längsverschiebung der Hülse 24 ist in dem Block 20h eine zweite Bohrung 25 mit einer Erweiterung 25a vorgesehen, in welchen ein zweiter Bolzen 26 sowie eine zweite Hülse 27 angeordnet sind. Der Bolzen 26 weist an seinem einen Ende eine Führung 26a auf, in welche eine Führung 24b der Hülse 24 spielfrei eingreift.

Das entgegengesetzte Ende des Bolzens 26 ist mittels eines Gewindes in ein Innengewinde der zweiten Hülse 27 eingeschraubt. Die Hülse 27 ist mittels eines Außengewindes in ein Innengewinde der Erweiterung 25a eingeschraubt.

Bei Drehung der Hülse 27 mittels des Drehknopfes 27a wird somit der zweite Bolzen 26 innerhalb der zweiten Bohrung 25 in Längsrichtung verschoben, da er z. B. durch den Stift 28 gegen Verdrehen gesichert ist, und verschiebt dadurch die erste Hülse 24 wodurch die Breite des Spaltes 23 verändert wird. Da wie oben erwähnt, die Maßabweichungen sehr gering ist, ist eine extreme Feineinstellung sowohl der Höhe als auch der Breite des Schlitzes 23 erforderlich. Aus diesem Grund beträgt die Exzentrizität des Exzenters 22c zwischen 0,05 und 0,1 mm. Die Feineinstellung der Schlitzbreite wird dadurch erreicht, daß die Steigung des Innengewindes der Erweiterung bzw. des Außengewindes der zweiten Hülse 27 größer ist als die Steigung des Innengewindes der Hülse 27 bzw. des Gewindes des Bolzen 25. Die Translationsbewegung des Bolzens 26 ergibt sich somit als Differenz der aus den unterschiedlichen Steigungen ergebenden absoluten Translationsbewegung von Hülse 27 und Bolzen 26. Der Sinn dieser Maßnahme liegt darin, daß derart feine Gewindesteigungen nicht oder nur unter extrem großem Aufwand machbar sind.

Die Figur 6 zeigt einen Querschnitt durch ein Bändchenkabel mit den Lichtwellenleitern 2a bis 2e, die jeder aus einer nicht näher bezeichneten optischen Glasfaser und einer Kunststoffschicht (coating) aus Acrylharz besteht. Die Lichtwellenleiter 2a bis 2e weisen unterschiedliche Einfärbungen an ihrer Oberfläche auf. Die Lichtwellenleiter 2a bis 2e sind durch die Zwickel ausfüllende Acrylharzschicht 18 zu dem Bändchenkabel 12 vereinigt.

## Patentansprüche

1. Verfahren zur Herstellung eines Lichtwellenleiterkabels aus mehreren in einer Ebene nebeneinander liegenden Lichtwellenleitern, die gemeinsam in einer Schicht aus einem UV-gehärteten synthetischen Harz eingebettet sind (Bändchenkabel)gekennzeichnet durch die folgenden Merkmale:
a) die in horizontaler Richtung zugeführten Lichtwellenleiter werden mit dem noch flüssigen synthetischen Harz benetzt
b) die Lichtwellenleiter werden in direktem Kontakt miteinander parallel und in einer horizontalen Ebene zueinander verlaufend durch ein Werkzeug mit einem den Außenabmessungen des Bändchenkabels entsprechenden Schlitz hindurchgeführt und dabei wird das den Lichtwellenleitern anhaftende flüssige Harz in die Zwickel zwischen den Lichtwellenleitern gedrückt und füllt diese zumindest teilweise aus und
c) das Harz wird unmittelbar nach dem Austritt aus dem Werkzeug mit UV-Strahlung gehärtet.

2. Verfahren nach Anspruch 1, dadurch gekennzeichnet, daß die Lichtwellenleiter in einer Ebene dicht nebeneinander verlaufend durch das noch flüssige synthetische Harz hindurchgeführt werden, wobei in dem Harz ein Druck von mehr als 1bar vorherrscht.

3. Verfahren nach Anspruch 1 oder 2, dadurch gekennzeichnet, daß die einzelnen Lichtwellenleiter unmittelbar vor dem Benetzen mit dem Harz mit einer Farbschicht versehen werden.

4. Verfahren nach einem der Ansprüche 1 bis 3, dadurch gekennzeichnet, daß die Lichtwellenleiter vor dem Benetzen einander elektrostatisch anziehen.

5. Verfahren nach Anspruch 4, dadurch gekennzeichnet, daß die Lichtwellenleiter wechselweise elektrostatisch aufgeladen und entionisiert werden.

6. Verfahren nach einem der Ansprüche 1 bis 5, dadurch gekennzeichnet, daß die Lichtwellenleiter in horizontaler Richtung durch ein Bad aus flüssigem synthetischem Harz hindurchgeführt werden.

7. Verfahren nach einem der Ansprüche 1 bis 6, dadurch gekennzeichnet, daß die Lichtwellenleiter nach dem Benetzen zwischen zwei zylindrischen Walzen hindurchgeführt werden, von denen zumindest eine eine in Umfangsrichtung verlaufende Nut aufweist, in welcher die parallel in einer Ebene gelegenen Lichtwellenleiter geführt werden.

8. Verfahren nach einem der Ansprüche 1 bis 7, dadurch gekennzeichnet, daß die Lichtwellenleiter einzeln mit einer nahezu gleichmäßig dichten Harzschicht beschichtet werden, daß anschließend die beschichteten Lichtwellenleiter in einer Ebene liegend zusammengeführt und durch den Schlitz des Werkzeugs hindurchgeführt werden und unmittelbar anschließend das Harz gehärtet wird.

9. Verfahren nach Anspruch 7, dadurch gekennzeichnet, daß der Außendurchmesser der in das Bad aus flüssigem, synthetischem Harz einlaufenden Lichtwellenleiter gemessen wird und daß der Schlitz bezüglich der Breite und der Höhe angepaßt wird.

10. Verfahren nach einem der Ansprüche 1 bis 9, dadurch gekennzeichnet, daß das Bändchenkabel mit weiteren Harzschichten versehen wird.

11. Vorrichtung zur Herstellung eines Lichtwellenleiterkabels aus mehreren in einer Ebene nebeneinander liegenden Lichtwellenleitern, die gemeinsam in einer Schicht aus einem UV-gehärteten synthetischen Harz eingebettet sind (Bändchenkabel) gekennzeichnet durch
a) eine Ablaufvorrichtung für die auf Spulen (1a - 1d) befindlichen Lichtwellenleiter (2a - 2d)
b) eine Vorrichtung (10) zum Benetzen der Lichtwellenleiter (2a - 2d, 9) mit flüssigem synthetischem Harz.
c) eine Vorrichtung (10g, 10h) mit einem Längsschlitz (10n) zum Zusammenführen der Lichtwellenleiter (2a - 2d) in eine Bändchenform und/oder zum Abstreifen und gleichmäßigen Verteilen von überschüssigem Harzmaterial
d) eine unmittelbar dahinter angeordnete UV-Härtungseinrichtung (11) für das synthetische Harz sowie
e) eine Aufwickelvorrichtung (16) für das fertige Bändchenkabel (12),
wobei die Vorrichtungen a) bis e) in einer horizontalen Ebene angeordnet sind und einen im Wesentlichen horizontalen Durchlauf der Lichtwellenleiter (2a - 2d) und des Bändchenkabels (12) gewährleisten.

12. Vorrichtung nach Anspruch 11, dadurch gekennzeichnet, daß die Ablaufvorrichtungen (1a - 1d) für die Lichtwellenleiter (2a - 2d) jeweils mit einer Hysteresebremse abbremsbar sind.

13. Vorrichtung nach Anspruch 11 oder 12, dadurch gekennzeichnet, daß unmittelbar hinter der Ablaufvorrichtung (1a - 1d) für die Lichtwellenleiter (2a - 2d) eine Abzugsscheibe (3, 3a) für alle Lichtwellenleiter (2a - 2d) angeordnet ist, die über einen sog. Tänzer (4) geregelt ist.

14. Vorrichtung nach einem der Ansprüche 11 bis 13, dadurch gekennzeichnet, daß zwischen der Abzugsscheibe (3, 3a) und der Vorrichtung (10) zum Benetzen eine Einfärbeeinrichtung (6) für die Lichtwellenleiter (2a - 2d) vorgesehen ist.

15. Vorrichtung nach Anspruch 14, dadurch gekennzeichnet, daß für jeden Lichtwellenleiter (2a - 2d) eine Ringdüse vorgesehen ist, in welcher auf den Lichtwellenleiter (2a - 2d) ein eingefärbtes flüssiges synthetisches Harz aufgebracht wird und daß hinter den Ringdüsen eine UV-Härtungsanlage (7) angeordnet ist.

16. Vorrichtung nach einem der Ansprüche 11 bis 15, dadurch gekennzeichnet, daß die Vorrichtung (10) zum Benetzen der Lichtwellenleiter (2a - 2d) ein Badbehälter (10a) mit einem Überlauf (10d) am eingangsseitigen (10c) und einem Überlauf (10e) am ausgangsseitigen Ende (10f) ist, daß der Badbehälter (10a) während des Betriebes so weit (10b) mit flüssigem synthetischen Harz gefüllt ist, daß das synthetische Harz durch die Überläufe (10d, 10e) austritt, so daß die Lichtwellenleiter (2a - 2d) vom Eintritt in den Badbehälter (10a) bis zum Austritt aus dem Badbehälter (10a) vollständig in das flüssige synthetische Kunstharz eintauchen.

17. Vorrichtung nach Anspruch 16, dadurch gekennzeichnet, daß unterhalb des Badbehälters (10a) eine Auffangwanne (10i) vorgesehen ist, von der das aus den Überläufen (10d, 10e) in die Auffangwanne (10i) gelangte flüssige synthetische Harz mittels einer Pumpe in den Badbehälter (10a) zurücktransportiert wird.

18. Vorrichtung nach einem der Ansprüche 11 bis 15, dadurch gekennzeichnet, daß die Vorrichtung (20) zum Benetzen der Lichtwellenleiter (2a...2n) eine Druckkammer (20d) ist, die sowohl am eingangs- als auch am ausgangsseitigen Ende abgedichtet ist.

19. Vorrichtung nach Anspruch 18, dadurch gekennzeichnet, daß die ausgangsseitige Abdichtung der Druckkammer (20d) durch einen den Querschnitt des Bändchenkabels (12) formenden Schlitz (23) gebildet und die Höhe des Schlitzes (23) durch einen Exzenter (22c) und die Breite des Schlitzes (23) durch eine auf dem Exzenter (22c) längsverschiebliche Hülse (24) einstellbar ist.

20. Vorrichtung nach Anspruch 18 oder 19, dadurch gekennzeichnet, daß die Vorrichtung (20) aus einem Block besteht mit einer ersten Bohrung (21) zwischen Block (20h) und Oberteil (20g), in welcher ein erster Bolzen (22) mit einem Drehknopf (22a) drehbar jedoch in längsaxialer Richtung im Block festgelegt gelagert ist, der drei Stufungen (22b,22c,22d) aufweist, von denen die erste in der Bohrung (21) geführt ist, die zweite Stufung (22c) exzentrisch zur ersten Stufung (22b)ist und die dritte Stufung (22d) wieder zentrisch zur ersten Stufung (22b) ist, daß von der dem Drehknopf (22a) gegenüberliegenden Seite der ersten Bohrung (21) eine Hülse (24) in die erste Bohrung (21) eingeführt ist, die in der ersten Bohrung (21) längsverschieblich geführt ist und mit der dritten Stufung (22d) gegen Verdrehung gesichert ist, und die an ihrem einem Ende eine exzentrische Bohrung (24a) aufweist, die den Exzenter (22c) teilweise aufnimmt.

21. Vorrichtung nach einem der Ansprüche 18 bis 20, dadurch gekennzeichnet, daß in einer zweiten Bohrung (25) des Blocks (20h) ein zweiter Bolzen (26) längsverschieblich aber gegen Verdrehung gesichert gelagert ist, daß in einer Erweiterung (25a) der zweiten Bohrung (25) eine mit Drehknopf (27a) versehene zweite Hülse (27) mittels eines Gewindes geführt ist, daß die zweite Hülse (27) ein das Ende des zweiten Bolzens (26) aufnehmendes Gewinde aufweist, der bei Drehung der zweiten Hülse (27) innerhalb der Bohrung (25) verschiebbar ist, daß an dem aus der zweiten Bohrung (25) herausragenden Ende des zweiten Bolzens (26) ein mit einer Umfangsnut verlaufendes Rad (26a) angeordnet ist und daß in die Nut ein radialer Vorsprung (24b) der ersten Hülse (24) eingreift.

22. Vorrichtung nach Anspruch 21, dadurch gekennzeichnet, daß die Steigung des Außengewindes der zweiten Hülse (27) größer ist als die Steigung des Innengewindes, so daß sich die pro Umdrehung der zweiten Hülse (27) ergebende längsaxiale Verschiebung des zweiten Bolzens (26) und damit der ersten Hülse (24)als Differenz der Steigungen ergibt.

23. Vorrichtung nach einem der Ansprüche 11 bis 22, dadurch gekennzeichnet, daß unmittelbar vor der Vorrichtung (10) zum Benetzen der Lichtwellenleiter (2a - 2d) für jeden Lichtwellenleiter (2a - 2d) eine Auflade- oder Entionisierungsvorrichtung (8) vorgesehen ist und daß in wechselnder Folge Auflade- und Entionisierungsvorrichtungen nebeneinander angeordnet sind, so daß sich benachbarte Lichtwellenleiter (2a - 2d) gegenseitig anziehen.

24. Vorrichtung nach Anspruch 23, dadurch gekennzeichnet, daß die Aufladevorrichtung ein Filzteil ist, mit dem die elektrostatisch aufzuladenden Lichtwellenleiter im Durchlauf kontaktiert werden.

25. Vorrichtung nach einem der Ansprüche 11 bis 24, dadurch gekennzeichnet, daß hinter dem Badbehälter (10a) zwei Walzen (10g, 10h) mit horizontalen Achsen vorgesehen sind, daß zumindest eine der Walze (10h) eine umfangsseitig verlaufende Nut (10n) aufweist, so daß sich ein den Querschnitt des Bändchenkabels (12) formender Schlitz bildet, durch den die Lichtwellenleiter (2a - 2d, 9) hindurchführbar sind.

26. Vorrichtung nach einem der Ansprüche 11 bis 25, dadurch gekennzeichnet, daß der Badbehälter, die Walzen (10g, 10h) und die Auffangswanne (10i) in einem lichtundurchlässigen Behälter untergebracht sind.

27. Vorrichtung nach einem der Ansprüche 11 bis 26, dadurch gekennzeichnet, daß hinter der der Vorrichtung (10) zur Benetzung der Lichtwellenleiter (2a - 2d) nachgeschalteten UV-Härtungseinrichtung (11) eine Signiereinrichtung (13) für das Bändchenkabel (12) vorzugsweise eine Lasersigniereinrichtung vorgesehen ist.

28. Vorrichtung nach einem der Ansprüche 11 bis 27, dadurch gekennzeichnet, daß vor der Aufwickelvorrichtung (16) eine Abzugsvorrichtung (14) für das ausgehärtete Bändchenkabel (12) vorgesehen ist, die über einen Tänzer (15) geregelt ist.
